# EUROPEAN PATENT APPLICATION

(11) **EP 4 800 903 A1**
(43) Date of publication of application: **02.09.2026**
(21) Application number: 25225378.6
(22) Date of filing: 19.12.2025
(51) Int. Cl.: H02M 1/32, H02M 1/42, H02M 3/335

(54) **CURRENT COMPENSATOR FOR LIMITING OVERCURRENT IN POWER CONVERTERS**

(30) Priority: 27.02.2025 US 202519065822
(71) Applicant: BorgWarner, Inc., Auburn Hills, MI 48326 (US)
(72) Inventor: SREEDHAR, Sunil, Westfield, IN (US); YERNAGU, Suraj, Bangalore (IN)
(74) Representative: Office Freylinger

(57) **Abstract**

A system includes: an alternating current (AC) to direct current (DC) converter (AC-DC converter) connectable to a load; a DC to DC converter (DC-DC converter) connected to the AC-DC converter and connectable to a battery; and one or more controllers including a current limiting compensator to control an operation of the AC-DC converter to control a voltage from the battery to the load.

## Description

### TECHNICAL FIELD

Various embodiments of the present disclosure relate generally to systems and methods for limiting overcurrent in a power converter, and, more particularly, to systems and methods for controlling load current while regulating the output voltage to a desired level for a power converter with variable load conditions, such as a vehicle to load (V2L) application.

### BACKGROUND

Power converters, such as onboard chargers (OBCs) for electric vehicles, are designed to utilize high voltage (HV) batteries and inverters for reverse charging applications, such as V2L applications. V2L applications generate a desired output voltage from the HV batteries based on the connected load. In V2L applications, current cannot be predicted beforehand as any compatible device may be connected for charging or powering. Generating overcurrent may damage the load, the OBCs, or other elements.

The present disclosure is directed to overcoming one or more of these above-referenced challenges.

### SUMMARY OF THE DISCLOSURE

In some aspects, the techniques described herein relate to a system including: an alternating current (AC) to direct current (DC) converter (AC-DC converter) connectable to a load; a DC to DC converter (DC-DC converter) connected to the AC-DC converter and connectable to a battery; and one or more controllers including a current limiting compensator to control an operation of the AC-DC converter to control a voltage from the battery to the load.

In some aspects, the techniques described herein relate to a system, wherein the current limiting compensator includes: a current comparator; a feedback controller connected to an output of the current comparator; and a voltage signal generator connected to an output of the feedback controller.

In some aspects, the techniques described herein relate to a system, wherein the current limiting compensator further includes: a gain amplifier connected to the output of the current comparator and an input of the feedback controller.

In some aspects, the techniques described herein relate to a system, wherein the current limiting compensator further includes: a limiter connected to the output of the feedback controller and an input to the voltage signal generator.

In some aspects, the techniques described herein relate to a system, wherein the current limiting compensator further includes: a saturation calculator connected to an input of the feedback controller; and a peak current calculator connected to an input of the saturation calculator.

In some aspects, the techniques described herein relate to a system, wherein the peak current calculator is configured to output a peak current from an RMS current, wherein the RMS current is a sum of three inductor currents.

In some aspects, the techniques described herein relate to a system, wherein the saturation calculator is configured to output a high saturation limit and a low saturation limit to the feedback controller based on comparing a peak current with a peak reference current.

In some aspects, the techniques described herein relate to a system, wherein the current comparator is configured to output an error signal based on comparing an RMS current with an RMS overcurrent limit.

In some aspects, the techniques described herein relate to a system, wherein the feedback controller is configured to generate a voltage control signal, and the voltage signal generator is configured to generate a reference voltage from the voltage control signal.

In some aspects, the techniques described herein relate to a system, wherein the voltage control signal is greater than or equal to zero and less than or equal to one.

In some aspects, the techniques described herein relate to a system, further including: the battery connected to the DC-DC converter, wherein the system is provided as an electric vehicle.

In some aspects, the techniques described herein relate to a system including: one or more controllers including a current limiting compensator to control an operation of an alternating current (AC) to direct current (DC) converter (AC-DC converter) to control a voltage from a battery to a load.

In some aspects, the techniques described herein relate to a system, wherein the current limiting compensator controls the voltage from the battery to the load by: generating, by comparing a voltage control signal with an initial reference voltage, a voltage reference; and controlling, by the voltage reference, the voltage from the battery to the load.

In some aspects, the techniques described herein relate to a system, wherein the one or more controllers are configured to control a current input to the load by: generating, by comparing a current reference and a total root mean square (RMS) current, the voltage reference; and controlling, by the voltage reference, the current input to the load from the battery.

In some aspects, the techniques described herein relate to a system, wherein the initial reference voltage is approximately 110 V or approximately 230 V.

In some aspects, the techniques described herein relate to a method including: controlling an operation of an AC-DC converter to control a voltage from a battery to a load using current limiting compensation.

In some aspects, the techniques described herein relate to a method, wherein the controlling the operation includes: determining a current for the load; generating, based on the current, a voltage control signal; and controlling the operation of the AC-DC converter based on the voltage control signal.

In some aspects, the techniques described herein relate to a method, wherein the determining the current includes: generating an error based on comparing a current reference to a total RMS current; and determining the current based on the error.

In some aspects, the techniques described herein relate to a method, wherein the controlling the operation includes: comparing a voltage reference to an undervoltage threshold value; and controlling the operation of the AC-DC converter to stop a power conversion of the AC-DC converter based on the comparing.

In some aspects, the techniques described herein relate to a method, wherein the current limiting compensation includes: generating, based on a peak current, a voltage control signal; generating, based on the voltage control signal, a voltage reference; and controlling, based on the voltage reference, an output current to the load.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a power converter, according to one or more embodiments.
FIG. 2 depicts an exemplary system infrastructure for a vehicle including a power converter, according to one or more embodiments.
FIG. 3 depicts an implementation of a computer system that may execute techniques presented herein, according to one or more embodiments.
FIG. 4 depicts an exemplary electrical schematic for a single-phase bidirectional power converter, according to one or more embodiments.
FIG. 5 depicts an exemplary system infrastructure of a power converter including a voltage controller, according to one or more embodiments.
FIG. 6 depicts an exemplary system infrastructure of an RMS current overcurrent limiting compensator, according to one or more embodiments.
FIG. 7 depicts an exemplary system infrastructure of an RMS and peak current overcurrent limiting compensator, according to one or more embodiments.
FIG. 8 depicts a flowchart of a method of operating a power converter, according to one or more embodiments.
FIG. 9 depicts an exemplary plot for generating a reference voltage based on RMS voltage, according to one or more embodiments.
FIG. 10 depicts an exemplary plot for generating a reference voltage based on RMS and peak voltages, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to systems and methods for limiting overcurrent in a power converter, and, more particularly, to systems and methods for controlling load current while regulating the output voltage to a desired level for a power converter with variable load conditions, such as a vehicle to load (V2L) application.

A power converter, such as a battery charger, for example, according to the disclosure may operate with multiple types of alternating current (AC) input power supplies, including single-phase, split/dual/two-phase, and three-phase power supplies. The charger may be compatible with a wide range of configurations. An Inductor-Inductor-Capacitor (LLC) converter may be used as a second stage converter using a direct current (DC) link voltage generated from the Power Factor Correction (PFC) as the input voltage for the converter. However, the disclosure is not limited thereto.

The input and output layout of the charger may follow automotive standards. A battery charger according to the disclosure may include a two-stage configuration, including an AC-DC power factor correction converter stage and an isolated DC-DC converter stage. The isolated DC-DC converter may include a full-bridge driver configuration with resonant tank elements to achieve better efficiency. The DC-DC converter may be designed to charge the battery from minimum voltage to maximum voltage. The AC-DC converter may be one or more of a totem pole full bridge, AC-AC matrix, half-bridge (e.g. three legs and six switches), a three-level active neutral-point-clamped, Vienna rectifier, or T-type converter, for example. The DC-DC converter may be one or more of a phase shifted, dual active bridge, CLLLC, or LLC converter, for example.

A power converter according to the disclosure may operate as a battery charger only or operate bidirectionally for a charging operation or a power supply operation. The converter may either receive power from an AC power source and provide DC power to a battery or receive power from the battery and provide power as an AC power source. A V2G configuration may be achieved with a designed control strategy for single-phase, two-phase, and three-phase systems. Switches of the battery charger may be any devices, such as GTO, thyristors, or MOSFETs/ IGBTs with series diodes, for example. These switches may also be mechanical components (such as relays or contactors) if sufficient failure rates and arcing conditions during operation are met. Additionally, if the switches are semi-permanent in position, the switches may be implemented as one or more jumper connectors or dual in-line package (DIP) switches.

With electric vehicles (EV) becoming more popular due to increased fuel prices and stricter fuel emission regulations, the usage of EVs for other applications are emerging. These applications may include energy storage and backup generators. The OBC has a dual purpose. It is a bidirectional system that converts AC to DC voltage in charging mode and DC to AC in discharge or inverter mode (AC-DC converter). Charge mode is normally used to convert the grid AC into DC voltage to charge the vehicle's battery, and discharge, or inverter mode converts the battery DC voltage into AC voltage that could be supplied to the grid, be supplied as a back generator to power a house when the grid is down, or as an inverter to supply voltage to vehicle AC outlets.

OBCs are expected to be bi-directional with battery charging and inverter operation. An OBC may be utilized for reverse charging applications, for example in V2L applications. V2L applications are typically limited by voltage control allowing regulation of the output voltage to desired levels. Currents may not be controlled, as the load current cannot be predicted beforehand. A cascaded voltage and current loop would not be efficient to control the load current, as one cannot predict the load current at a given instance. One or more embodiments may provide current control with voltage regulation. One or more embodiments may protect the converter, the load, and other circuitry elements from any overcurrent and under/over voltage damage.

A two-stage design may be used for an onboard charger to meet any power requirements. The configuration, used in single-phase and three-phase chargers, may comprise an AC-DC power factor converter (PFC) in stage 1 and an isolated DC-DC converter in stage 2. For example, during the discharge or inverter mode of operation, the isolated DC-DC converter may use the battery voltage to charge a bulk capacitor. The PFC stage may use the bulk capacitor voltage to generate the required AC voltage output. In the inverter mode, the PFC stage may be controlled via a voltage control loop, which may regulate the output voltage to the desired voltage and frequency levels.

The voltage controller may receive the AC load voltage as feedback. The controller may receive a known reference voltage and reference frequency. The controller, with the known reference voltage and reference frequency, may generate pulse width modulating (PWM) signals such that a desired AC voltage may be obtained across the AC load.

One or more embodiments may provide control for a load current and a load voltage based on a root mean square (RMS) current overcurrent limiting compensator (current limiting compensator). This approach may determine an error between a total AC RMS current (total RMS current) and an RMS overcurrent limit. The total AC RMS current may be the summation of individual inductor currents. The RMS overcurrent limit may be specified by the vehicle or a hardware limitation. The error may be passed through a compensator to formulate a voltage control signal. The error may be multiplied with an initial reference voltage to obtain a final reference voltage level. This final reference voltage may be utilized by the voltage compensator to control the converter's voltage to a desired level, thereby controlling the current delivered at the load.

One or more embodiments may provide control to a load current and a load voltage based on an RMS current and a peak current overcurrent limiting compensator. This approach may employ the RMS current overcurrent limiting compensator, as described above. Additionally, the system may utilize peak currents to determine one or more saturation limits. The RMS current and peak current overcurrent limiting compensator may employ the one or more saturation limits to control the current output at the load.

One or more embodiments may provide control to the power conversion system based on comparing currents to a reference current value. When a controller determines that an RMS current and/or a peak current fall below a threshold (such as an RMS reference current and/or a peak reference current), the controller may continue to generate a voltage that matches a reference value. The load currents may be limited by the load impedance. When the controller determines that a current is above a threshold, the controller may limit the output current by reducing the output voltage. For example, an RMS current limiting compensator may control currents to stay within an overcurrent limit reference. The output voltage was reduced when the RMS current exceeded the overcurrent limit. This method may protect the system from overcurrent without the need for additional hardware.

One or more embodiments may provide control to the power conversion system based on adjusting saturation limits. A controller may determine load saturation limits based on peak currents. When a controller determines that a peak current exceeds a peak threshold limit, the controller may adjust the one or more saturation limits. Adjusting the one or more saturation limits may decrease a generated final voltage reference, protect devices from overcurrent, protect devices from exceeding an overvoltage threshold, and improve controller settling time. One or more embodiments may provide control to a power conversion system by terminating the power conversion system. A controller may compare one or more currents to one or more reference currents and compare one or more voltages to a voltage threshold. Based on the comparisons, the controller may determine to stop the power conversion. For example, when a controller determines that a reference voltage, generated based on one or more current inputs, drops below an undervoltage threshold value, the system may stop the power conversion. The controller may determine to stop the power conversion based on an additional comparison between one or more currents to one or more reference currents. This method may protect the system from damage due to impermissible current and voltages sent to the load.

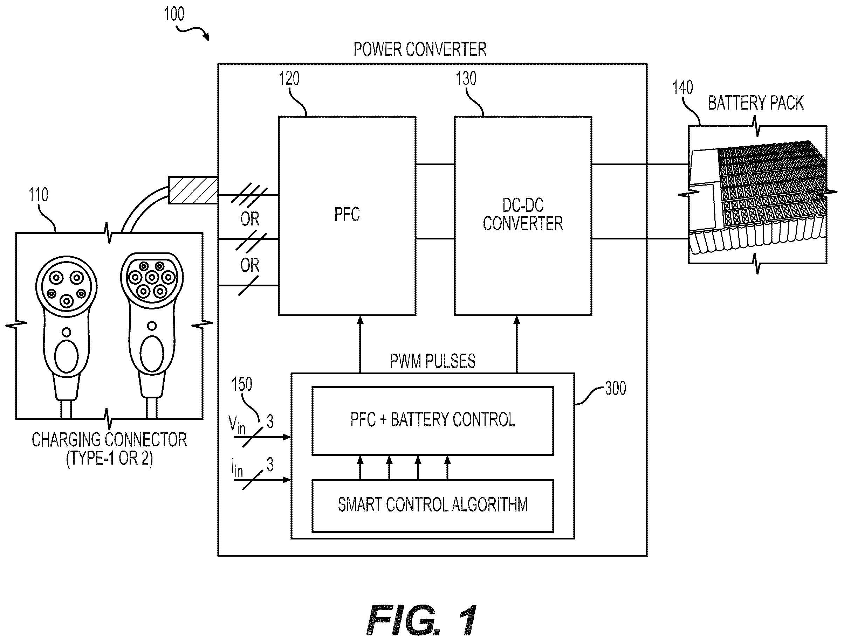

FIG. 1 depicts an exemplary system infrastructure for a power converter, according to one or more embodiments. As shown in FIG. 1, a power converter 100 may include or be electrically connectable to a charging connector 110. The charging connector 110 may provide an electrical connection from an external power supply to the power converter 100 and may be a Type 1 or a Type 2 connector, for example. The charging connector 110 may transfer single-phase, two-phase, or three-phase power.

The power converter 100 may include a Power Factor Correction (PFC) converter 120, an HV DC-DC converter (HV DC-DC) 130, and a controller 300 receiving signals from input sensor 150. PFC converter 120 may be an alternating current (AC) to direct current (DC) converter (AC-DC converter). HV DC-DC converter 130 may be a DC to DC converter (DC-DC converter). Controller 300 may include one or more controllers. The power converter 100 may include or be electrically connectable to a battery 140. The power converter 100 may be used in automotive vehicles as an onboard charger to transfer power from an external power source through charging connector 110 to battery 140 in a grid-to-battery operation, or to transfer power from battery 140 in a vehicle to grid configuration (a battery-to-grid operation). The power converter 100 may be included in a system provided as an electric vehicle including a motor configured to rotate based on power received from the battery 140.

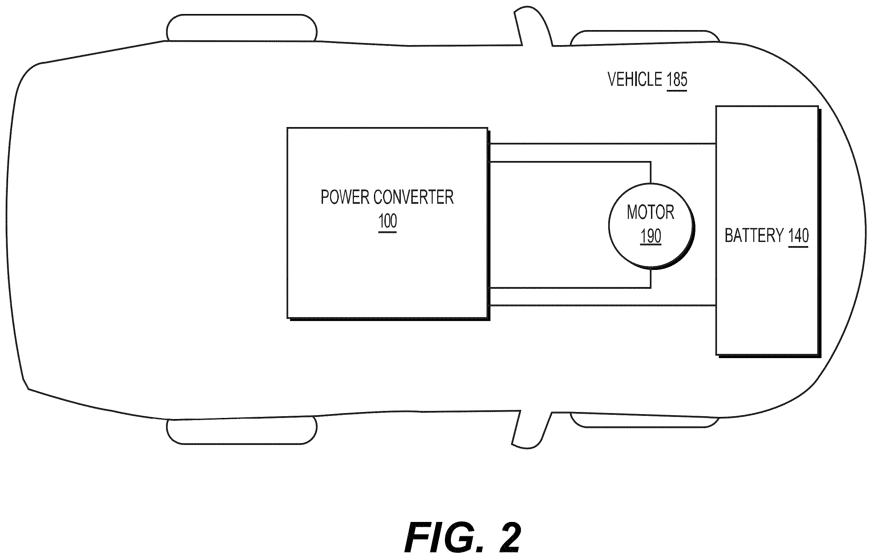

FIG. 2 depicts an exemplary system infrastructure for a vehicle including a power converter, according to one or more embodiments. The power converter 100 may be a combined inverter and converter. As shown in FIG. 2, electric vehicle 185 may include power converter 100, motor 190, and battery 140. Power converter 100 may include components to receive electrical power from an external source and output electrical power to charge battery 140 of electric vehicle 185. Power converter 100 may convert DC power from battery 140 in electric vehicle 185 to AC power, to drive motor 190 of the electric vehicle 185, for example, but the embodiments are not limited thereto. For example, power converter 100 may include components to receive electrical power from an external source and output electrical power to charge battery 140 without motor 190 connected to power converter 100. Power converter 100 may convert DC power from battery 140 in electric vehicle 185 to AC power, to drive AC components other than motor 190 of the electric vehicle 185. Power converter 100 may be bidirectional, and may convert DC power to AC power, or convert AC power to DC power, such as during regenerative breaking, for example. Power converter 100 may be a three-phase inverter, a single-phase inverter, or a multi-phase inverter.

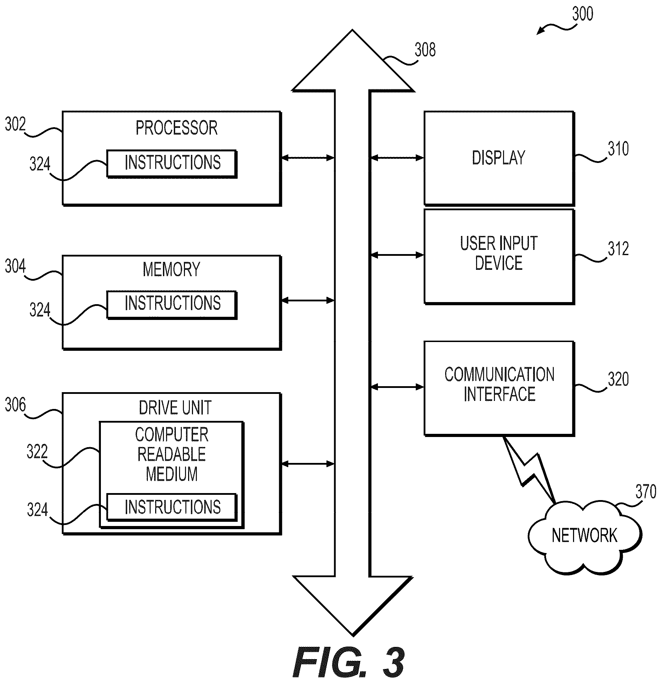

FIG. 3 depicts an implementation of a controller 300 that may execute techniques presented herein, according to one or more embodiments. FIG. 3 depicts an exemplary system infrastructure for a controller, according to one or more embodiments.

Any suitable system infrastructure may be put into place to allow control of the battery charger. FIG. 3 and the following discussion provide a brief, general description of a suitable computing environment in which the present disclosure may be implemented. In one embodiment, any of the disclosed systems, methods, and/or graphical user interfaces may be executed by or implemented by a computing system consistent with or similar to that depicted in FIG. 3. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, minicomputers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

The controller 300 may include a set of instructions that can be executed to cause the controller 300 to perform any one or more of the methods or computer-based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As illustrated in FIG. 3, the controller 300 may include a processor 302, e.g., a central processing unit (CPU), a graphics processing unit (GPU), or both. The processor 302 may be a component in a variety of systems. For example, the processor 302 may be part of a standard computer. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g., software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to, TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, and HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

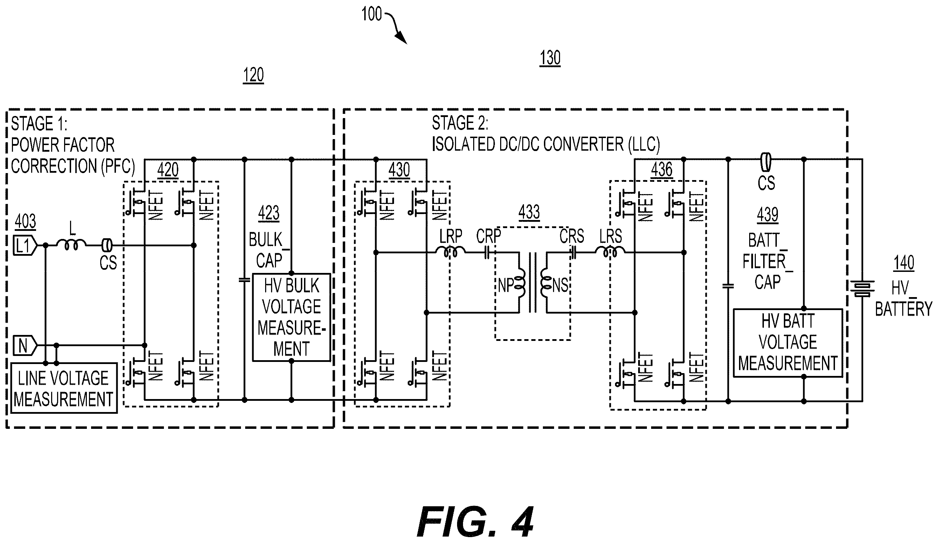

FIG. 4 depicts an exemplary electrical schematic for a single-phase bidirectional power converter, according to one or more embodiments. As shown in FIG. 4, power converter 100 may include PFC converter 120 and HV DC-DC converter 130. PFC converter 120 may be connected to load 403, which may be a single-phase voltage, for example. Load 403 may be a line voltage in a charging operation and may be a load in a power supplying operation of power converter 100. HV DC-DC converter 130 may be connected to battery 140. HV DC-DC converter 130 may be operable to isolate PFC converter 120 from battery 140. For example, HV DC-DC converter 130 may be a CLLLC converter, or any suitable DC-DC converter.

PFC converter 120 may include PFC converter switch 420 and bulk capacitor 423. PFC converter switch 420 may be one or more switches, such as four NFET switches, for example, as shown in FIG. 4. PFC converter 120 may include other components, such as inductor L, current sensor CS, line voltage detector, and bulk capacitor voltage detector, for example.

HV DC-DC converter 130 may include bridge driver switch 430, one or more transformers 433, bridge rectifier switch 436, and HV filter capacitor 439. Bridge driver switch 430 may be one or more switches, such as four NFET switches, for example, as shown in FIG. 4. Bridge rectifier switch 436 may be one or more switches, such as four NFET switches, for example, as shown in FIG. 4. HV DC-DC converter 130 may include other components, such as primary side inductor LRP, secondary side inductor LRS, primary side capacitor CRP, secondary side capacitor CRS, current sensor CS, and battery voltage detector, for example.

The power converter 100 may operate bidirectionally. A vehicle to grid (V2G) configuration may be achieved with a designed control strategy for multiple voltages. The PFC converter 120 may be configured to receive DC power from battery 140 through HV DC-DC converter 130, convert the DC power to AC power, and provide the AC power as an output to load 403. The controller 300 may be designed with an algorithm to control an operation of the PFC converter 120 and HV DC-DC converter 130.

Bridge driver switch 430 may be operated as a full bridge driver or a half bridge driver, and transmit power as a square-wave signal from PFC converter 120 to one or more transformers 433. One or more transformers 433 may be one or more high-frequency transformers and may be a single transformer with multiple coils or windings, multiple transformers with single coils or windings, or any combination thereof. One or more transformers 433 may be connected to bridge rectifier switch 436. Bridge rectifier switch 436 may convert the square-wave signal to DC power. Controller 300 may be designed with and/or configured to execute an algorithm for control of the PFC converter switch 420, bridge driver switch 430, and bridge rectifier switch 436.

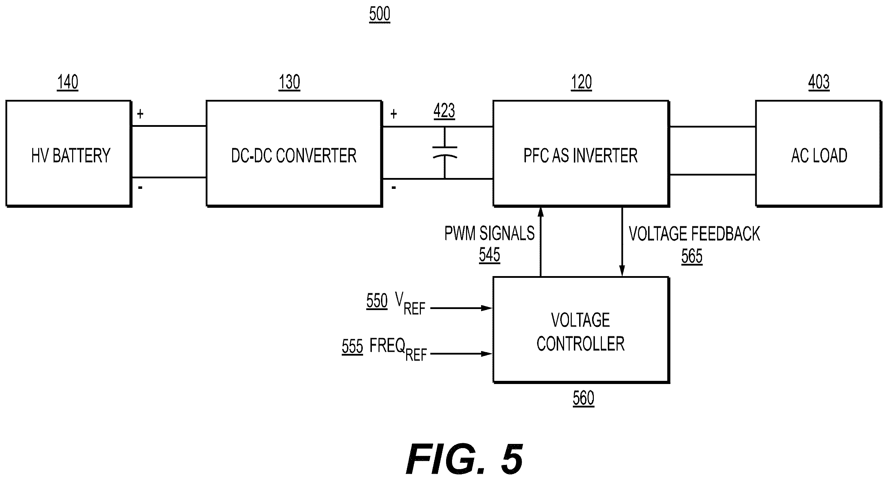

FIG. 5 depicts an exemplary system infrastructure of a power converter including a voltage controller, according to one or more embodiments. System 500 may include battery 140, HV DC-DC converter 130, bulk capacitor 423, PFC converter 120, voltage controller 560, and load 403. Battery 140 may be connected to HV DC-DC converter 130. HV DC-DC converter 130 may be connected to battery 140 and PFC converter 120. Bulk capacitor 423 may connect HV DC-DC converter 130 and PFC converter 120 and may be, for example, a DC-line capacitor. PFC converter 120 may be connected to HV DC-DC converter 130, voltage controller 560, and load 403. Voltage controller 560 may be connected to PFC converter 120. Load 403 may connect to PFC converter 120.

Voltage controller 560 may control voltage output and current output from battery 140 to the load 403. Voltage controller 560 may communicate with, or may be part of, controller 300. For example, the battery 140 may be employed to charge devices or provide power to load 403. The bulk capacitor 423 may be used to smooth out voltage fluctuations from HV DC-DC converter 130, thereby providing a steady voltage to PFC converter 120. PFC converter 120 may act as an inverter, converting DC power from the battery 140 to AC power. PFC converter 120 may be connected to a voltage controller 560, for controlling output voltage from the PFC converter to the load 403.

Voltage controller 560 may control the output voltage and output current to load 403 based on received voltage reference 550 and frequency reference 555. The voltage controller 560 may generate PWM signals 545 based on voltage reference 550 and frequency reference 555. Voltage controller 560 may transmit PWM signals 545 to PFC converter 120. PFC converter 120 may use PWM signals 545 to regulate output voltage to load 403. PFC converter 120 may analyze the voltage at load 403 and send voltage feedback 565 to voltage controller 560. The voltage feedback 565 may be sent to voltage controller 560 periodically, or in real time. Voltage controller 560 may receive voltage feedback 565 from PFC converter 120. Voltage controller 560 may adjust one or more duty cycles of the PWM signals 545 based on received voltage feedback 565. PFC converter 120 and voltage controller 560 may be in communication with controller 300. PFC converter 120 and voltage controller 560 may continuously send and transmit PWM signals 545 and voltage feedback 565 in a feedback loop.

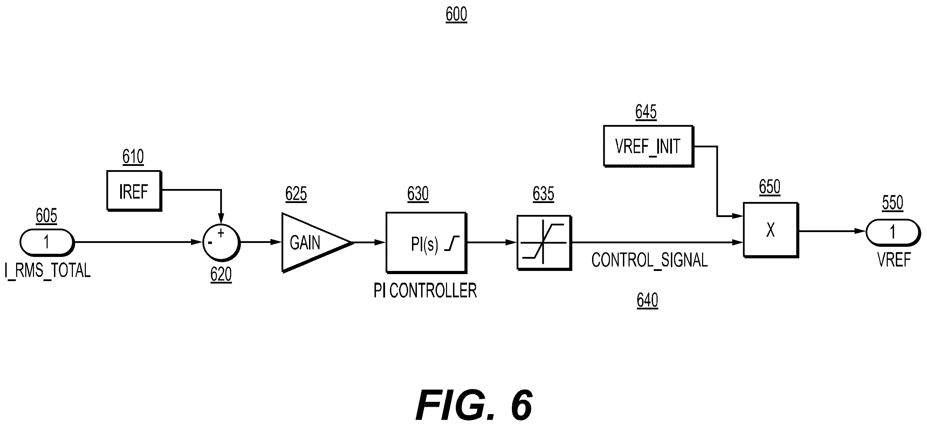

FIG. 6 depicts an exemplary system infrastructure of an RMS current overcurrent limiting compensator (current limiting compensator). RMS current overcurrent limiting compensator 600 may be a component of voltage controller 560, for example, or may be a separate component from voltage controller 560. RMS current overcurrent limiting compensator 600 may include operator 620, gain amplifier 625, proportional integral (PI) controller 630, limiter 635, and voltage multiplier 650. Operator 620 may receive, as inputs, total RMS current 605 and RMS overcurrent limit 610 (current reference). An output of operator 620 may be connected to an input of gain amplifier 625. An output of gain amplifier 625 may be connected to an input of PI controller 630. An output of PI controller 630 may be connected to an input of limiter 635. An output of limiter 635 may be connected to an input of voltage multiplier 650. Voltage multiplier 650 may receive initial reference voltage 645 and voltage control signal 640 as inputs. Voltage control signal 640 may be output from limiter 635. Voltage multiplier 650 may be a voltage signal generator and output voltage reference 550 to voltage controller 560.

As shown in FIG. 6, RMS current overcurrent limiting compensator 600 may compare total RMS current 605 and RMS overcurrent limit 610 at operator 620. Total RMS current 605 may be determined, for example, from the total sum of current of the three inverter phases driving motor 190. The disclosure is not limited to three leaves. The total sum of current may be a summation of greater than three converter leaves or fewer than three converter leaves. For example, the total sum of current may be a summation of two converter leaves. RMS overcurrent limit 610 may be specified by the electric vehicle 185 or a hardware element. The RMS overcurrent limit 610 may be saved and retrieved from, for example, a look up table or other storage element.

Operator 620 may be a current comparator and may analyze total RMS current 605 and RMS overcurrent limit 610 and determine an error signal. The error signal may be provided to gain amplifier 625. Gain amplifier 625 may amplify the error signal and provide the error signal to PI controller 630. The disclosure is not limited to a PI controller. For example, the controller may be one or more of a proportional (P) controller, an integral (I) controller, a derivative (D) controller, a proportional derivative controller (PD), a proportional integral derivative (PID) controller, or other controller. PI controller may be referred to as feedback controller.

PI controller 630 may receive the error signal from gain amplifier 625 and may generate a voltage control signal. Based on a continual feedback loop from total RMS current 605, PI controller 630 may correct the voltage control signal in real time based on the error signal. To continuously modify the voltage control signal, PI controller 630 may employ a proportional control method and an integral control method. The proportional control method may adjust output based on a magnitude of the error. The integral control method may correct for residual errors by analyzing past errors over time. The PI controller 630 may output the voltage control signal to limiter 635. Limiter 635 may impose a voltage maximum limit and/or a voltage minimum limit on the voltage control signal from PI controller 630 to generate voltage control signal 640. The maximum limit and/or minimum limit may be predefined. Voltage control signal 640 may have a value that is greater than or equal to zero and less than or equal to one, for example.

Voltage control signal 640 may be provided to voltage multiplier 650. Voltage multiplier 650 may receive voltage control signal 640 and an initial reference voltage 645. Initial reference voltage 645 may be predefined and saved in a storage device. Initial reference voltage 645 may be approximately 110 V or approximately 230 V, for example. Controller 300 may adjust initial reference voltage 645 based on real time events. Voltage multiplier 650 may multiply voltage control signal 640 and initial reference voltage 645 to generate voltage reference 550.

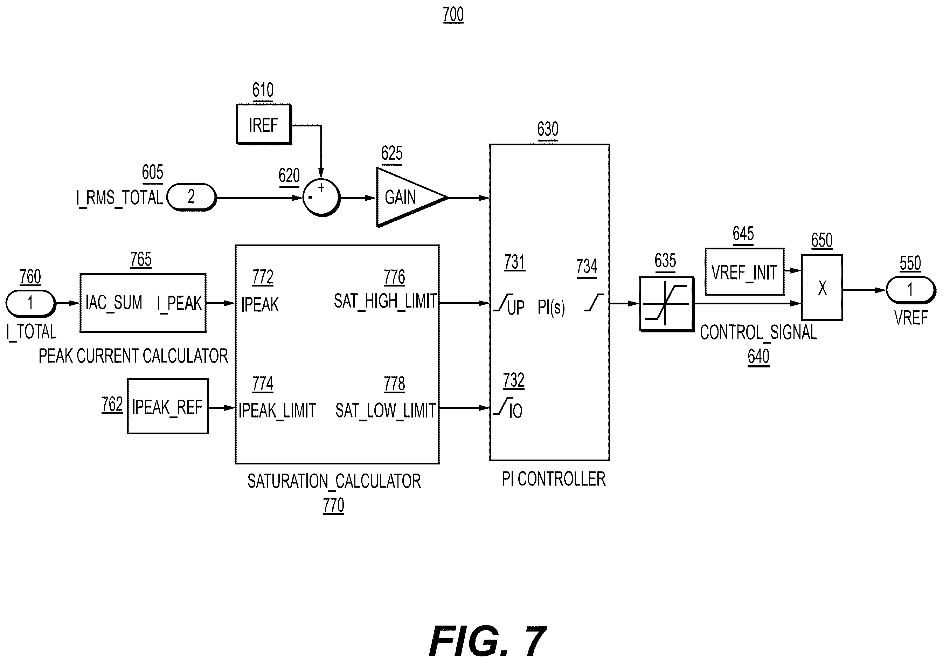

FIG. 7 depicts an exemplary system infrastructure of an RMS and peak current overcurrent limiting compensator. RMS and peak current overcurrent limiting compensator 700 may output voltage reference 550 based on total RMS current 605 and peak current 772. RMS and peak current overcurrent limiting compensator 700 may include operator 620, gain amplifier 625, PI controller 630, limiter 635, and voltage multiplier 650. Operator 620, gain amplifier 625, limiter 635, and voltage multiplier 650 are described in the description of FIG. 6.

RMS and peak current overcurrent limiting compensator 700 may include peak current calculator 765 and saturation calculator 770. Peak current calculator 765 may receive total current 760 and determine a peak current 772. Peak current calculator 765 may output peak current 772 to saturation calculator 770. Saturation calculator 770 may receive peak current 772 from peak current calculator 765. Saturation calculator 770 may receive peak reference current 762 and generate peak current limit 774 based on peak reference current 762. For example, peak reference current 762 may be passed down to peak current limit 774 as peak reference current 762 equals peak current limit 774 as an assignment operation in the saturation calculator 770. Peak reference current 762 may be a predefined and stored value, for example. Saturation calculator 770 may be connected to PI controller 630.

Saturation calculator 770 may determine one or more saturation limits, such as high saturation limit 776 and low saturation limit 778, based on peak current 772 and peak current limit 774. High and low saturation limits may be determined by comparing peak current 772 with peak current limit 774. For example, when peak current 772 is greater than peak current limit 774, high saturation limit 776 may be reduced to low saturation limit 778, for example from one (1) to 0.8. When peak current 772 is less than peak current limit 774, high saturation limit 776 may be increased to a maximum value or maintained as is. The maximum value may be one (1). Low saturation limit 778 may be a constant, predefined threshold factor based on an allowable system undervoltage limit. After determining high saturation limit 776 and low saturation limit 778, saturation calculator 770 may output high saturation limit 776 and low saturation limit 778 to PI controller 630.

PI controller 630 may receive the error signal from gain amplifier 625 and the determined high saturation limit 776 and low saturation limit 778 and determine a maximum current output 731 and a minimum current output 732. Maximum current output 731 may be a maximum control output, and minimum current output 732 may be a minimum control output. PI controller 630 may generate a voltage control signal 734 based on the error signal from gain amplifier 625, the maximum current output 731, and the minimum current output 732. PI controller 630 may determine maximum current output 731 based on the determined high saturation limit 776. PI controller 630 may determine minimum current output 732 based on the determined low saturation limit 778.

The PI controller 630 may output the voltage control signal 734 to limiter 635. Limiter 635 may impose a voltage maximum limit control signal and/or a voltage minimum limit control signal on voltage control signal 734 and generate voltage control signal 640. The maximum limit and/or minimum limit may be predefined or determined based on real time feedback. Limiter 635 may provide voltage control signal 640 to voltage multiplier 650. Voltage multiplier 650 may receive voltage control signal 640 and initial reference voltage 645. Voltage multiplier 650 may multiply voltage control signal 640 and initial reference voltage 645 to output voltage reference 550.

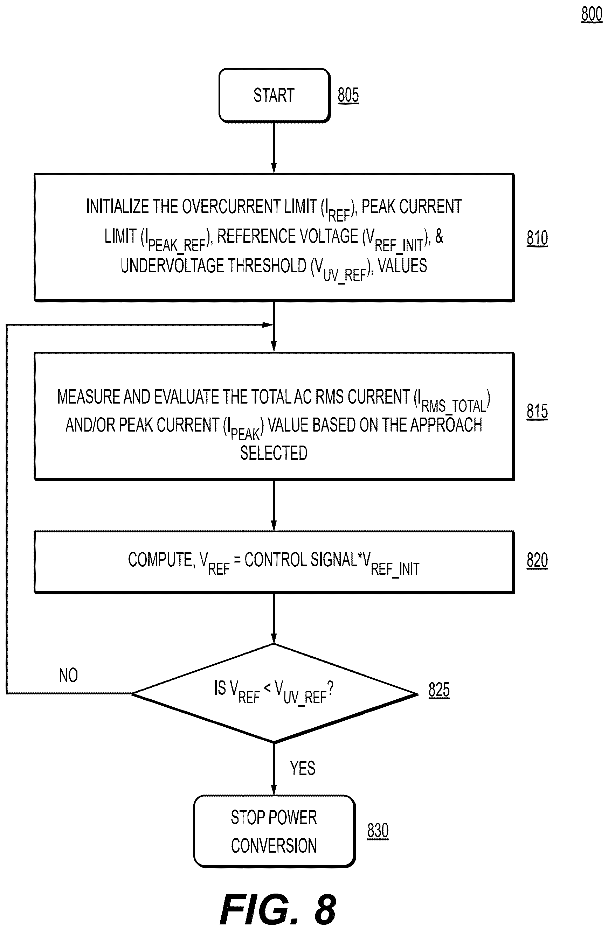

FIG. 8 depicts a flowchart of a method 800 of operating a power converter. The method may control the current output to the load by determining a reference voltage based on the RMS current and/or peak current calculations. As shown in FIG. 8, controller 300 may start the voltage controlling method (operation 805) at a start-up, when detecting a load, or a similar event. For example, the operation may be initiated when a power conversion command is received from electric vehicle 185. Upon beginning the method, controller 300 may initialize RMS overcurrent limit 610, retrieve peak reference current 762, and determine an undervoltage threshold value (operation 810). The undervoltage threshold value may be pre-defined or customer driven. For example, the undervoltage threshold may be an input into power converter 100 from electric vehicle 185. In some instances, the undervoltage threshold value may be a predefined constant value based on an allowable system undervoltage limit. Initializing may include generating the values, retrieving the values from a storage device, or the like. The undervoltage threshold value may reflect the required operational voltage necessary to safely power the load. By incorporating the undervoltage threshold value in the voltage control calculation, controller 300 may ensure that load 403 may safely operate given the provided voltage.

Controller 300 may control the current output using RMS current overcurrent limiting compensator 600 or RMS and peak current overcurrent limiting compensator 700 using current limiting compensation. Based on the compensator (RMS current overcurrent limiting compensator 600 or RMS and peak current overcurrent limiting compensator 700) used, controller 300 may measure one or more of total RMS current 605 or total current 760. Controller 300 may then determine voltage control signal 640, as shown in FIG. 6 or FIG. 7, and compute peak current 772, as shown in FIG. 7, based on the approach selected (operation 815). After determining voltage control signal 640 and peak current 772, controller 300 may generate voltage reference 550 based on multiplying voltage control signal 640 and initial reference voltage 645 (operation 820).

Controller 300 may determine whether voltage reference 550 is less than the undervoltage threshold (operation 825). When controller 300 determines that voltage reference 550 is less than the undervoltage threshold, controller 300 may stop the power conversion method (operation 830). Terminating the power conversion when voltage reference 550 is less than the undervoltage threshold may prevent damage to load 403, power converter 100, or other elements in electric vehicle 185. In some instances, controller 300 may perform an auto restart after termination to attempt power conversion to check if the overcurrent conditions are eliminated. This process may allow for a restart after determining an undervoltage or allow for the option of terminating the power conversion. When controller 300 determines that voltage reference 550 is greater than the undervoltage threshold (operation 825), the method may return to operation 815 and continue. In some instances, this operation may include an automatic restart or a manual restart.

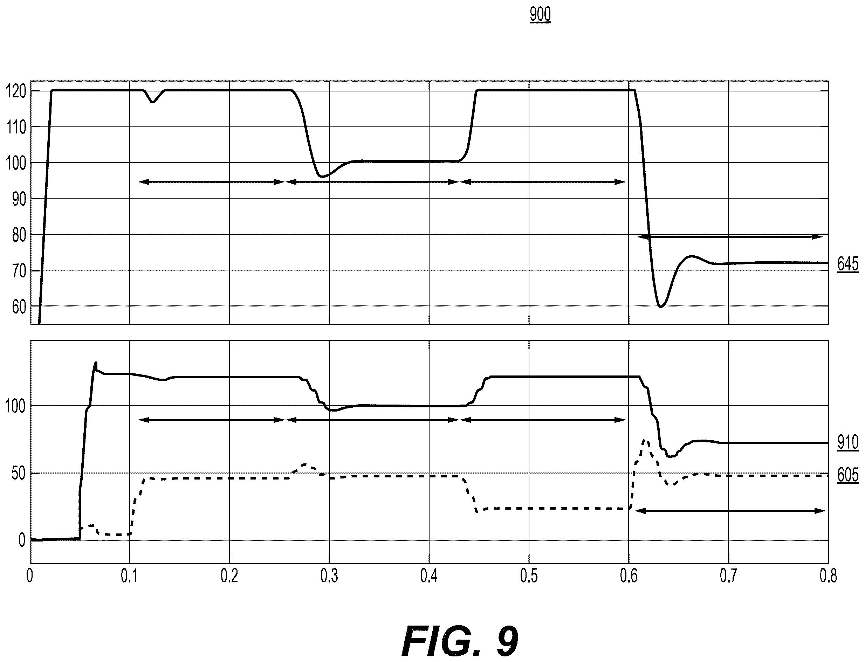

FIG. 9 depicts exemplary plot 900 for generating a reference voltage based on an RMS voltage, as depicted in FIG. 6. As shown in FIG. 9, voltage controller 560 may determine output voltage 910 to deliver to load 403 based on initial reference voltage 645 and total RMS current 605 under varying load conditions (horizontal arrows). The system may control the current delivered to load 403 to stay within RMS overcurrent limit 610 while compensating for varying load conditions and generating a desired output power supply. For example, the output voltage 910 decreases during load conditions that present situations where total RMS current 605 exceed RMS overcurrent limit 610 values.

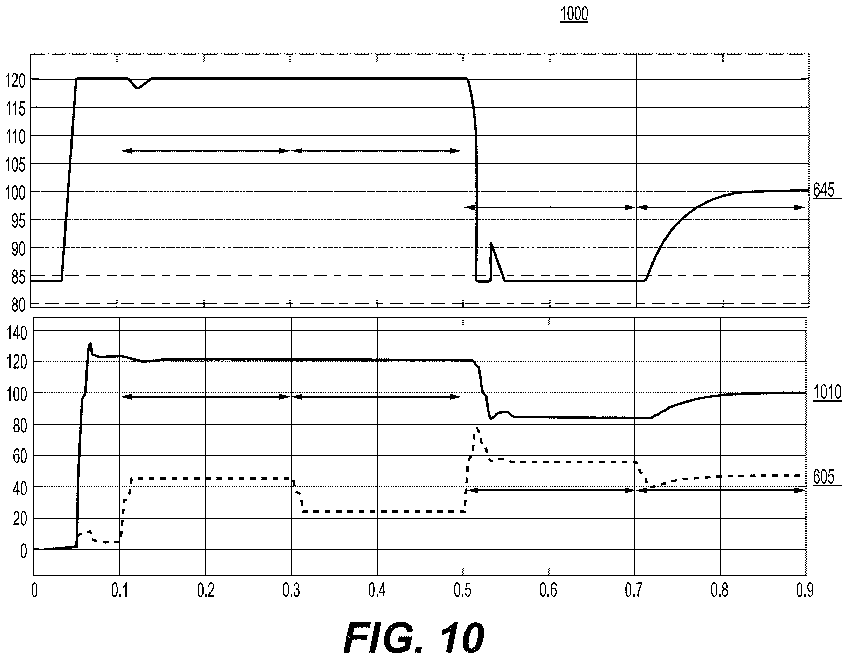

FIG. 10 depicts exemplary plot 1000 for generating a reference voltage based on an RMS and peak voltage controller, as described in FIG. 7. As shown in FIG. 10, voltage controller 560 may determine output voltage 1010 to deliver to load 403 based on initial reference voltage 645 and total RMS current 605 and saturation limits determined from peak current 772 under varying load conditions (horizontal arrows). The method may control the current to stay within RMS overcurrent limit 610 and peak reference current 762 compensating for varying load conditions and generating a desired output power supply. For example, the output voltage 1010 decreases during load conditions that present situations where total RMS current 605 exceed RMS overcurrent limit 610 values or where peak current 772 exceeds peak current limit 774. Saturation limits described in FIG. 7 were changed when the total current 760 was reached, based on a comparison of the peak current 772 and peak current limit 774 and a comparison of total RMS current 605 and RMS overcurrent limit 610, resulting in improving the settling time of the controller and lowering initial reference voltage 645.

One or more embodiments may provide control for a load current and a load voltage based on an RMS current overcurrent limiting compensator. This approach may determine an error between a total AC RMS current and an RMS overcurrent limit. The error may be multiplied with an initial reference voltage to obtain a final reference voltage level. This final reference voltage may be utilized by the voltage compensator to control the converter's voltage to a desired level.

One or more embodiments may provide control to a load current and a load voltage based on an RMS current and a peak current overcurrent limiting compensator. This approach may employ the RMS current overcurrent limiting compensator and may utilize peak currents to determine one or more saturation limits. The RMS current and peak current overcurrent limiting compensator may employ the one or more saturation limits to control the current output at the load. A final reference voltage may be utilized by the voltage compensator to control the converters voltage to a desired level thereby controlling the current received at the load.

One or more embodiments may provide control to the power conversion system based on comparing currents to a reference current value. When a controller determines that an RMS current and/or a peak current fall below a threshold (such as an RMS reference current and/or a peak reference current), the controller may continue to generate a voltage that matches a reference value. When the controller determines that a current is above a threshold, the controller may limit the output current by reducing the output voltage. This method may protect the system from overcurrent without the need for additional hardware.

One or more embodiments may control the power conversion system based on adjusting saturation limits. A controller may determine load saturation limits based on peak currents. When a controller determines that a peak current exceeds a peak threshold limit, the controller may adjust the one or more saturation limits. Adjusting the one or more saturation limits may modify a final voltage reference, protect devices from overcurrent, protect devices from exceeding an overvoltage threshold, and improve controller settling time.

One or more embodiments may provide control to a power conversion system by terminating the power conversion system. A controller may compare one or more reference voltages to a voltage threshold. Based on the comparison, the controller may stop the power conversion. For example, when a controller determines that a determined reference voltage drops below an undervoltage threshold value, the system may stop the power conversion. The controller may determine to stop the power conversion based on an additional comparison between one or more currents to one or more reference currents. This method may protect the system from damage due to impermissible currents and voltages sent to the load.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system comprising:
an alternating current (AC) to direct current (DC) converter (AC-DC converter) connectable to a load;
a DC to DC converter (DC-DC converter) connected to the AC-DC converter and connectable to a battery; and
one or more controllers including a current limiting compensator to control an operation of the AC-DC converter to control a voltage from the battery to the load.

2. The system of claim 1, wherein the current limiting compensator includes:
a current comparator;
a feedback controller connected to an output of the current comparator; and
a voltage signal generator connected to an output of the feedback controller.

3. The system of claim 2, wherein the current limiting compensator further includes a gain amplifier connected to the output of the current comparator and an input of the feedback controller; and/or
wherein the current limiting compensator further includes a limiter connected to the output of the feedback controller and an input to the voltage signal generator.

4. The system of claim 2 or 3, wherein the current limiting compensator further includes:
a saturation calculator connected to an input of the feedback controller; and
a peak current calculator connected to an input of the saturation calculator.

5. The system of claim 4, wherein the peak current calculator is configured to output a peak current from an RMS current, wherein the RMS current is a sum of three inductor currents; and/or
wherein the saturation calculator is configured to output a high saturation limit and a low saturation limit to the feedback controller based on comparing a peak current with a peak reference current.

6. The system of any one of claims 2 to 5, wherein the current comparator is configured to output an error signal based on comparing an RMS current with an RMS overcurrent limit.

7. The system of any one of claims 2 to 6, wherein the feedback controller is configured to generate a voltage control signal, and the voltage signal generator is configured to generate a reference voltage from the voltage control signal;
and wherein, preferably, the voltage control signal is greater than or equal to zero and less than or equal to one.

8. The system of any one of claims 1 to 7, further comprising:
the battery connected to the DC-DC converter,
wherein the system is provided as an electric vehicle.

9. A system comprising:
one or more controllers including a current limiting compensator to control an operation of an alternating current (AC) to direct current (DC) converter (AC-DC converter) to control a voltage from a battery to a load.

10. The system of claim 9, wherein the current limiting compensator controls the voltage from the battery to the load by:
generating, by comparing a voltage control signal with an initial reference voltage, a voltage reference; and
controlling, by the voltage reference, the voltage from the battery to the load;
and wherein, preferably, the one or more controllers are configured to control a current input to the load by:
generating, by comparing a current reference and a total root mean square (RMS) current, the voltage reference; and
controlling, by the voltage reference, the current input to the load from the battery.

11. The system of claim 10, wherein the initial reference voltage is approximately 110 V or approximately 230 V.

12. A method comprising:
controlling an operation of an AC-DC converter to control a voltage from a battery to a load using current limiting compensation.

13. The method of claim 12, wherein the controlling the operation includes:
determining a current for the load;
generating, based on the current, a voltage control signal; and
controlling the operation of the AC-DC converter based on the voltage control signal;
and wherein, preferably, the determining the current includes:
generating an error based on comparing a current reference to a total RMS current; and
determining the current based on the error.

14. The method of any one of claims 12 to 13, wherein the controlling the operation includes:
comparing a voltage reference to an undervoltage threshold value; and
controlling the operation of the AC-DC converter to stop a power conversion of the AC-DC converter based on the comparing.

15. The method of any one of claims 12 to 14, wherein the current limiting compensation includes:
generating, based on a peak current, a voltage control signal;
generating, based on the voltage control signal, a voltage reference; and
controlling, based on the voltage reference, an output current to the load.
